Europäisches Patentamt

European Patent Office

Office européen des brevets

(11) Veröffentlichungsnummer: **0 162 257**
**A1**

(12) **EUROPÄISCHE PATENTANMELDUNG**

(21) Anmeldenummer: 85104194.7

(22) Anmeldetag: 06.04.85

(51) Int. Cl.⁴: **A 47 J 31/54**

(30) Priorität: 21.04.84 DE 3415167

(43) Veröffentlichungstag der Anmeldung:
27.11.85 Patentblatt 85/48

(84) Benannte Vertragsstaaten:
DE FR GB IT NL

(71) Anmelder: Braun Aktiengesellschaft
Rüsselsheimer Strasse 22
D-6000 Frankfurt/Main(DE)

(72) Erfinder: Schindler, Hans
Messeler Strasse 2
D-6073 Egelsbach(DE)

(74) Vertreter: Einsele, Rolf
Braun Aktiengesellschaft Postfach 1120 Frankfurter
Strasse 145
D-6242 Kronberg Taunus(DE)

(54) Kaffeemaschine mit Warmhalteplatte.

(57) Bei einer elektrischen Kaffeemaschine, deren Warmhalteplatte (1) durch das Heizelement (2.4) ihres Durchlauferhitzers (2) erhitzt wird, befindet sich das Durchlaufrohr (2.3) des Durchlauferhitzers auf einem höheren Niveau als seine Zu- und Ablaufleitungen (2.1). Zur Vermeidung von Wasserrückständen in den Zu- und Ablaufleitungen sind diese durch das Heizelement (2.4) erhitzbar, so daß am Ende jedes Brühvorganges alles Wasser aus ihnen verdampft.

FIG.1

EP 0 162 257 A1

Braun Aktiengecellschaft

**0162257**

05180-PT5/Do
04.04.1985

- 1 -

Die vorliegende Erfindung betrifft eine Kaffeemaschine gemäß dem Oberbegriff des Hauptanspruchs.

Derartige Kaffeemaschinen besitzen einen in einem senkrechten Gehäuseteil untergebrachten Wassertank, aus dem das Wasser durch eine Falleitung zu dem im Sockel unterhalb der Warmhalteplatte angeordneten Durchlauferhitzer fließt und, nachdem es in diesem erhitzt wurde, durch ein Steigrohr in den Kaffeefilter gelangt. Dabei ist die Warmhalteplatte im allgemeinen entweder bündig mit der Sockeloberfläche oder leicht versenkt in dieser angebracht, und der unter ihr befindliche Durchlauferhitzer einschließlich seines Ein- und Ausganges bildet die tiefste Stelle des gesamten Wasserleitungssystems der Kaffeemaschine.

Es stellte sich nun die Aufgabe, eine Kaffeemaschine zu schaffen, die in Verbindung mit speziellen Kaffeekannen verwendbar ist, welche sich dadurch vom Üblichen unterscheiden, daß ihr Boden einen nach unten vorstehenden umlaufenden Rand aufweist, der bei den üblichen Heizplattenanordnungen verhindern würde, daß der mittlere Teil des Kannenbodens mit der Heizplatte in Berührung kommen kann.

Zur Lösung dieser Aufgabe wird nach der vorliegenden Erfindung die Kombination der folgenden zwei Merkmale vorgeschlagen:

Erstens unterqueren der Wasserzulauf und der Wasserablauf des Durchlauferhitzers den Randbereich der Warmhalteplatte auf einem Höhenniveau, das niedriger liegt als das Höhenniveau des dazwischenliegenden Durchlaufrohres des Durchlauferhitzers, das wegen des erforderlichen engen Kontaktes zum elektrischen Rohrheizelement zusammen mit diesem unmittelbar unter der Heizplatte angeordnet sein muß.

...

BRAUN

Braun Aktiengesellschaft

0162257

05180-PT5/Do
04.04.1985

Hiermit sind zwar die Voraussetzungen dafür geschaffen, daß auch Kaffeekannen mit nach unten überstehendem Bodenrand mit dem Mittelteil ihres Bodens in vollflächigen Kontakt mit der Heizplatte gelangen können, jedoch ergibt sich ein neues Problem dadurch, daß der Zulauf und der Ablauf des Durchlauferhitzers nun die tiefsten Bereiche des Wasserleitungssystems der Kaffeemaschine bilden, so daß in ihnen jedesmal bei Beendigung des Kaffeebrühvorganges ein Wasserrest zurückbleibt, der bis zur nächsten Inbetriebnahme der Kaffeemaschine abgestanden sein und die Qualität der nächsten Kaffeecharge beeinträchtigen kann.

Zweitens sind daher gemäß der vorliegenden Erfindung der Zulauf und der Ablauf des Durchlauferhitzers durch dessen Heizelement erhitzbar. Durch diese Maßnahme ist sichergestellt, daß am Ende jedes Brühvorganges sämtliches Wasser auch aus dem tiefer liegenden Zulauf und Ablauf des Durchlauferhitzers restlos verdampft.

Vorzugsweise bilden der Zulauf und der Ablauf des Durchlauferhitzers, die bei üblichen Kaffeemaschinen aus flexiblen Schlauchstücken bestehen, mit dem Durchlaufrohr des Durchlauferhitzers ein durchgehendes Rohr mit wärmeleitender Wandung. In einer anderen vorteilhaften Ausführungsform bestehen sie aus Rohrabschnitten mit wärmeleitender Wandung, die wärmeleitend an das Durchlaufrohr des Durchlauferhitzers angekoppelt sind. In beiden Fällen ist dafür gesorgt, daß der Zulauf und der Ablauf durch das Heizelement des Durchlauferhitzers so miterhitzt werden, daß in ihnen am Ende jedes Brühvorganges alles Wasser verdampft.

In einer damit ermöglichten, bevorzugten Ausführungsform der Erfindung liegt die Warmhalteplatte höher als die Oberfläche des sie umgebenden Gerätesockels. Es kann jedoch auch vorteilhaft sein, sie lediglich von einer Vertiefung in Form einer Ringnut zu umgeben.

...

BRAUN

Braun Aktiengesellschaft

0162257

05180-PT5/Do
04.04.1985

Der Durchlauferhitzer ist mittels Schraub-, Klemm- und/oder Rastverbindungselementen, vorzugsweise unmittelbar und ausschließlich, an der Unterseite der Warmhalteplatte befestigt. Hierdurch befindet er sich erstens in einer definierten Lage zur Warmhalte-platte und zweitens bietet diese Befestigungsart gegenüber der üblichen Befestigung am Gehäusesockel den Vorteil, daß eine thermische Belastung des Sockelgehäuses weitgehend vermieden wird.

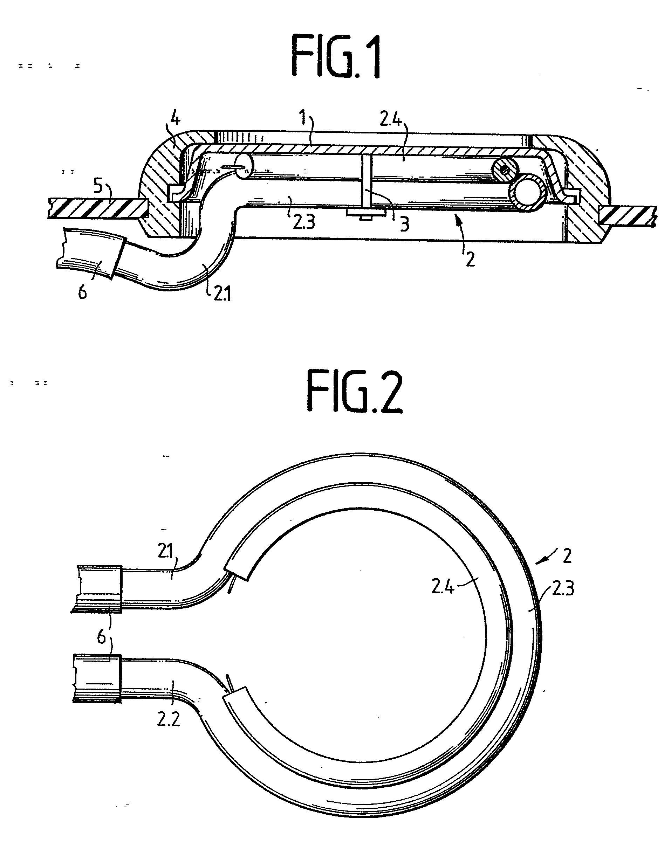

In der beigefügten Zeichnung ist ein bevorzugtes Ausführungsbeispiel des Erfindungsgegenstandes dargestellt. Figur 1 zeigt die gegenüber der Oberfläche des Kaffeemaschinen-Sockels 5 hochgesetzte Heizplatte 1 mit dem mittels eines Befestigungselementes 3 mit ihr verbundenen Durchlauferhitzer 2 im Querschnitt, während Figur 2 eine Draufsicht auf den Durchlauferhitzer 2 mit dem Zulauf 2.1 und dem Ablauf 2.2 wiedergibt.

Der Zulauf 2.1 und der Ablauf 2.2 liegen ersichtlich tiefer als das Durchlaufrohr 2.3 des Durchlauferhitzers und würden am Ende des Brühvorganges mit Wasser gefüllt bleiben, wenn sie nicht erfindungsgemäß thermisch an den Rohrheizkörper 2.4 so angekoppelt wären, daß dieser das Verkochen des Restwassers bewirkt. Die flexiblen Verbindungsstücke 6 schließen den Zulauf bzw. Ablauf an das vom Wassertank kommende Fallrohr bzw. das zum Kaffeefilter führende Steigrohr an. Zur Halterung der Heizplatte 1 in der dafür vorgesehenen Ausnehmung des Kaffeemaschinen-Sockels ist vorzugsweise ein Zwischenring 4 aus hitzestabilem Material vorgesehen, der durch Formgebung und Werkstoffauswahl so ausgelegt ist, daß er die Wärme der Heizplatte möglichst wenig auf das Sockel-gehäuse 5 überträgt.

...

BRAUN

Braun Aktiengesellschaft

05180-PT5/Do
04.04.1985

0162257

### Patentansprüche

1. Elektrische Kaffeemaschine mit einem Durchlauferhitzer für das Brühwasser und einer Warmhalteplatte für die Kaffeekanne, wobei die Warmhalteplatte von dem Heizelement des an ihrer Unterseite parallel zu dieser angeordneten Durchlauferhitzers erwärmt wird, dadurch gekennzeichnet, daß der Wasserzulauf (2.1) und der Wasserablauf (2.2) des Durchlauferhitzers (2) den Randbereich der Warmhalteplatte (1) auf einem Höhenniveau unterqueren, das niedriger liegt als das Höhenniveau des dazwischenliegenden Durchlaufrohres (2.3) des Durchlauferhitzers (2) und daß die tiefstliegenden Bereiche des Zulaufs (2.1) und des Ablaufs (2.2) durch das Heizelement (2.4) des Durchlauferhitzers erhitzbar sind.

2. Elektrische Kaffeemaschine nach Anspruch 1, dadurch gekennzeichnet, daß der Zulauf (2.1), das Durchlaufrohr (2.3) und der Ablauf (2.2) aus einem durchgehenden Rohr mit wärmeleitender Wandung bestehen.

3. Elektrische Kaffeemaschine nach Anspruch 1, dadurch gekennzeichnet, daß der Zulauf (2.1) und der Ablauf (2.2) aus Rohrabschnitten mit wärmeleitender Wandung bestehen und wärmeleitend an das Durchlaufrohr (2.3) angekoppelt sind.

4. Elektrische Kaffeemaschine nach einem der Ansprüche 1 bis 3, dadurch gekennzeichnet, daß die Warmhalteplatte (1) höher liegt als die Oberfläche des sie umgebenden Gerätesockels (5).

5. Elektrische Kaffeemaschine nach einem der Ansprüche 1 bis 4, dadurch gekennzeichnet, daß die Warmhalteplatte (1) von einer Vertiefung in Form einer Ringnut umgeben ist.

...

in Form 10.407/1-10/83

BRHUN

Braun Aktiengesellschaft

05180-PT5/Do
04.04.1985

0162257

6. Elektrische Kaffeemaschine nach einem der Ansprüche 1 bis 5, dadurch gekennzeichnet, daß der elektrische Durchlauferhitzer (2) mittels Schraub-, Klemm- und/oder Rastverbindungselementen (3) unmittelbar und ausschließlich an der Unterseite der Warmhalteplatte (1) befestigt ist.

...

0162257

# FIG.1

# FIG.2

Europäisches
Patentamt

EUROPÄISCHER RECHERCHENBERICHT

0162257
Nummer der Anmeldung

EP 85 10 4194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 455 326 (LICENTIA) <br> * Anspruch 2; Figur 5 * | 1,2,6 | A 47 J 31/54 |
| X | DE-A-2 441 825 (LICENTIA) <br> * Figuren 1,2 * | 1,2,6 | |
| A | FR-A-2 360 224 (BOSCH-SIEMENS) <br> * Figur 7; Seite 6, Zeilen 18-25 * | 1 | |
| A | DE-A-2 735 835 (BOSCH-SIEMENS) <br> * Figur 1 * | 1 | |

RECHERCHIERTE
SACHGEBIETE (Int. Cl.4)

A 47 J

Der vorliegende Recherchenbericht wurde für alle Patentansprüche erstellt.

| Recherchenort <br> DEN HAAG | Abschlußdatum der Recherche <br> 30-07-1985 | Prüfer <br> SCHARTZ J. |
|---|---|---|